Europäisches Patentamt

European Patent Office

Office européen des brevets

(19)

(11) Numéro de publication: **0 229 737 B1**

(12) **FASCICULE DE BREVET EUROPEEN**

(45) Date de publication du fascicule du brevet:
29.05.91 Bulletin 91/22

(51) Int. Cl.⁵: **B60N 2/02, B60N 2/44**

(21) Numéro de dépôt: **87400009.4**

(22) Date de dépôt: **06.01.87**

(54) **Appui à poche gonflable pour sièges de véhicules automobiles.**

(30) Priorité: **10.01.86 FR 8600267**

(43) Date de publication de la demande:
**22.07.87 Bulletin 87/30**

(45) Mention de la délivrance du brevet:
**29.05.91 Bulletin 91/22**

(84) Etats contractants désignés:
**DE GB IT**

(56) Documents cités:
PATENT ABSTRACTS OF JAPAN, vol. 7, no. 59
(M-199)[1204], 11 mars 1983; & JP-A-57 205 238
(TACHIKAWA SPRING K.K.) 16-12-1982

(73) Titulaire: **REGIE NATIONALE DES USINES RENAULT**
**Boîte postale 103 8-10 avenue Emile Zola**
**F-92109 Boulogne-Billancourt (FR)**

(72) Inventeur: **Thebault, Alain**
**54/56, rue Eugène Labiche**
**F-92500 Rueil Malmaison (FR)**

(74) Mandataire: **Ernst-Schonberg, Michel et al**
**REGIE NATIONALE DES USINES RENAULT (S. 0804)**
**F-92109 Boulogne Billancourt Cedex (FR)**

Jouve, 18, rue Saint-Denis, 75001 PARIS.

## Description

L'invention concerne les appuis à poches gonflables pour sièges de véhicules automobiles, recouverts d'un rembourrage et qui sont raccordées à un système de règlage.

On connaît par le modèle d'utilité DE-GmS 76 17 960 un appui dorsal consistant en des chambres pneumatiques en forme de manchons fabriquées dans un matériau élastique. Des pompes équipées chacune d'une soupape d'échappement permettent de règler individuellement la pression intérieure et d'adapter l'appui dorsal aux besoins de l'utilisateur du siège.

La publication FR-A-2 265 347 décrit un siège portant des appuis latéraux formés par des poches à billes tendues respectivement sur le cadre du siège au moyen d'une sangle passant dans les oeillets placés sur le pourtour de la poche. L'ensemble des poches communique par des tuyaux de manière à faciliter l'établissement d'un vide relatif et d'obtenir une cohésion des billes nécessaire à la réalisation d'un support suffisament rigide moulant l'utilisateur du siège.

La publication FR-A-2 276 798 décrit un dispositif de règlage mécanique des appuis latéraux d'un dossier de siège.

La publication JP-A-57-205 238 décrit un siège équipé de coussins gonflants placés sur une armature de siège sur laquelle ont été rapportés des éléments de flexion actionnés par les coussins et sur lesquels repose la matelassure du siège.

Les dispositifs connus ne permettent pas l'adaptation d'appuis gonflants préassemblés susceptibles d'être montés sur une armature de siège conventionnelle.

L'invention propose une solution au problème précité et a pour objet un siège dont les appuis latéraux pneumatiques peuvent être ajustés manuellement ou automatiquement à partir d'une source de pression indépendante.

L'invention se rapporte donc plus particulièrement à un appui à poche gonflable préassemblé reposant sur un élément de suspension et raccordée à un dispositif de remplissage conforme à la caractéristique de la revendication.

L'appui ainsi réalisé peut aisément reçevoir un coussin muni d'un revêtement extérieur d'aspect et améliore grandement le confort et le maintien de l'utilisateur du siège.

D'autres caractéristiques et avantages de l'appui ressortiront de la description d'un mode de réalisation de celui-ci appliqué à la confection d'une assise du siège, mais il est bien évident que l'appui pourrait tout aussi être intégré au dossier du siège dans le but de procurer un bon maintien latéral du buste de l'utilisateur du siège.

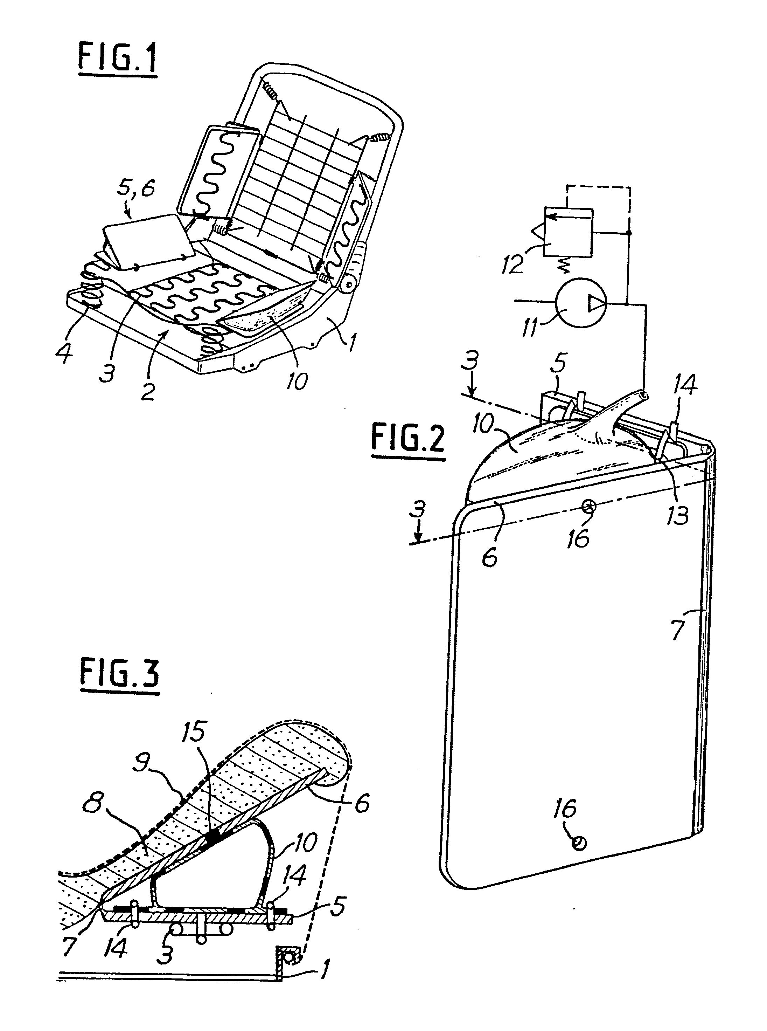

Sur le dessin, la figure 1 représente schématiquement une ossature de siège portant deux appuis de maintien latéral appliqués à un coussin de siège.

La figure 2 représente une poche gonflable maintenue entre ses deux volets.

La figure 3 est une vue en coupe du système de montage des volets sur le siège avec section de la poche et des volets suivant la ligne 3-3 de la figure 2.

En référence à la figure 1, l'armature 1 du siège supporte un cadre suspendu 2 à ressorts de charge 3. Le côté transversal avant du cadre 2 est suspendu sur l'armature 1 à l'aide de ressorts à boudin 4.

Les côtés latéraux du cadre 2 portent respectivement deux ensembles de deux volets 5, 6 réunis l'un à l'autre au moyen d'une charnière plastique 7.

Le volet 5 est fixé sur le cadre 2 en liaison avec un ressort de charge 3 disposé longitudinalement le long des côtés latéraux du cadre 2 de sorte que l'ouverture des volets 5, 6 soit orientée vers le côté latéral du siège.

Le volet 6 est recouvert par la garniture de rembourrage 8 complétée par un tissus d'habillage 9 tendu entre les éléments opposés de l'armature 1.

Entre les volets 5, 6 est disposée une poche gonflable 10 alimentée par une source de pression d'air 11 susceptible d'être mise à l'air au moyen d'une soupape 12.

La poche 10 porte à sa périphérie des oeillets 13 de fixation au moyen d'agrafes 14 au volet 5.

Le volet 6 est de la sorte rendu mobile par rapport au volet 5 sous l'effet de la pression de gonflage ou de dégonflage.

Dans le but d'éviter le glissement de la poche 10 hors des volets 5, 6, celle-ci porte des pions de positionnement 15 engagés dans les logements 16 portés par le volet 6.

Sans sortir du cadre de l'invention il sera bien entendu possible d'alimenter simultanément une série d'appuis latéraux du type précité appartenant à un ou plusieurs sièges à l'aide d'une même pompe ou d'un compresseur.

Il est bien entendu possible de prévoir le montage d'une telle poche sur le dossier du siège en utilisant des moyens de fixation analogues. Dans un tel cas, le volet 6 pourra être fixé sur un ressort de charge du dossier tandis que le volet 5 reposera sur une nappe de suspension et sur un élément de cadre du dossier.

## Revendications

1. Appui à poche gonflable (10) pour siège de véhicule automobile recouvert d'un rembourrage (8) reposant sur un élément (2) de suspension, dans lequel la poche est raccordée à un dispositif de remplissage et est placée sous un volet mobile (6), caractérisé par le fait que le volet mobile (6) est réuni par une charnière plastique (7) à un autre volet (5) fixé à l'élément (2) de suspension, la poche (10) étant placée entre les deux volets (5, 6).

2. Appui à poche gonflable selon la revendication 1, caractérisé par le fait que la périphérie de la poche porte des oeillets (13) de fixation à l'un (5) des volets (5, 6) et des moyens (15) de positionnement par rapport à l'autre volet (6).

## Ansprüche

1. Stütze mit aufblasbarer Kammer (10) für Kraftfahrzeugsitze, die mit einem Polster (8) bedeckt ist und die sich auf einem Halteteil (2) abstützt, in welchem die Kammer mit einer Füllanordnung verbunden ist, sowie unter einer beweglichen Klappe (6) angeordnet ist, dadurch gekennzeichnet, daß die bewegliche Klappe (6) über ein Kunststoffgelenk (7) mit einer weiteren Klappe (5) verbunden ist, die am Halteteil (2) befestigt ist, wobei die Kammer zwischen den beiden Klappen (5, 6) vorgesehen ist.

2. Stütze nach Anspruch 1, dadurch gekennzeichnet, daß der Umfang der Kammer Laschen (13) trägt zur Befestigung mit einer (5) der Klappen (5, 6), sowie eine Anordnung (15) aufweist zur Positionierung bezüglich der anderen Klappe (6).

## Claims

1. An inflatable pocket support (10) for an automobile vehicle seat covered with upholstery (8) resting on a suspension member (2), in which the pocket is connected to a filling device and is placed below a movable flap (6), characterized in that the movable flap (6) is connected by a plastic hinge (7) to a further flap (5) secured to the suspension member (2), the pocket (10) being placed between the two flaps (5, 6).

2. An inflatable pocket support as claimed in claim 1, characterized in that the periphery of the pocket bears eyelets (13) for fastening to one of the flaps (5, 6) and means (15) for positioning with respect to the other flap (6).

## FIG.1

## FIG.2

## FIG.3